# FASCICULE DE BREVET EUROPEEN

(11) **EP 1 346 158 B1**
(45) Date de publication et mention de la délivrance du brevet: **14.09.2005**
(21) Numéro de dépôt: 01272209.6
(22) Date de dépôt: 20.12.2001
(51) Int. Cl.: F16B 9/02, F16L 3/123

(54) **SYSTEME ET PROCEDE DE FIXATION D'UN OBJET A UNE PLAQUE**
VORRICHTUNG UND VERFAHREN ZUM BEFESTIGEN EINES GEGENSTANDES AUF EINER PLATTE
SYSTEM AND METHOD FOR FIXING AN OBJECT TO A PLATE

(30) Priorité: 22.12.2000 FR 0017010; 15.05.2001 FR 0106354
(43) Date de publication de la demande: 24.09.2003
(73) Titulaire: SOFANOU S.A., 25340 Anteuil (FR)
(72) Inventeur: LECUPPE, Thomas, F-25660 Montfaucon (FR)
(74) Mandataire: Gaglione, Renaud
(86) Numéro de dépôt international: PCT/IB2001/002632
(87) Numéro de publication internationale: WO 2002/052160

(56) Documents cités:
- EP-A- 0 813 018
- US-A- 3 999 356
- US-A- 4 667 916
- US-A- 6 062 763

## Description

L'invention se rapporte à un système et à un procédé pour fixer un objet à une plaque et plus particulièrement à un système et à un procédé dans lesquels l'objet est fixé à la plaque par l'intermédiaire d'une rondelle d'arc-boutement.

Un système de fixation d'un tube sur une plaque par l'intermédiaire d'une rondelle d'arc-boutement est connu notamment du document US-A-4 667 916.

Selon cette divulgation, la rondelle est pourvue de doigts sur un pourtour intérieur et la plaque comprend une tige fileté rapportée par soudage et un écrou vissé autour de la tige filetée. Les doigts du pourtour intérieur de la rondelle se déforment en flexion contre l'écrou lorsque la rondelle est enfoncée par rapport à la tige filetée. La flexion des doigts du pourtour intérieur contre l'écrou permet d'enfoncer la rondelle par rapport à la tige filetée avec un effort relativement faible par rapport à l'effort nécessaire pour retirer la rondelle de l'écrou après enfoncement et flexion des doigts. Le tube est lié à la rondelle pour être retenu par rapport à la plaque lorsque la rondelle est enfoncée par rapport à la tige filetée et arc-boutée contre l'écrou.

Un tel système de fixation par le biais d'un élément rapporté sur la plaque est coûteux et nécessite des moyens de mise en oeuvre souvent difficiles à intégrer dans un flux de production.

Il convient de noter qu'une rondelle d'arc-boutement est en soi bien connue. Il entre de surcroît dans les connaissances générales de l'homme du métier que les rondelles d'arc-boutement ne sont pas limitées aux rondelles pourvues de doigts, dites encore rondelles cannelées, décrites dans le document cité précédemment.

En effet, l'arc-boutement d'une rondelle cannelée est assuré principalement par la flexion des doigts ou cannelures. Mais une rondelle ne possédant pas de doigts est néanmoins capable de s'arc-bouter. Une rondelle de ce type est connu notamment du système de liaison entre deux tubes insérés l'un par rapport à l'autre décrit dans le document EP-A-813 018.

Selon cette divulgation, le tube externe supporte le tube interne par l'intermédiaire d'une rondelle liée au tube externe et possédant une ouverture centrale de diamètre plus petit que celui du tube interne pour s'arc-bouter lorsque le tube interne est forcé à' travers l'ouverture centrale.

Le but de l'invention est de permettre la fixation d'un objet sur une plaque par l'intermédiaire d'une rondelle d'arc-boutement de façon simple et économique.

A cet effet, l'invention a pour objet un système de fixation d'un objet à une plaque par l'intermédiaire d'une rondelle, dans lequel l'objet est lié à la rondelle et la plaque comprend une structure pour retenir l'objet par arc-boutement de la rondelle contre cette structure, caractérisé en ce que cette structure est un dôme conique, hémisphérique ou cylindrique de la plaque.

Le dôme conique, hémisphérique ou cylindrique offre une structure intégrée à la plaque elle-même et permet ainsi de s'affranchir de toute structure rapportée pour l'arc-boutement de la rondelle. Il en résulte une diminution du coût de réalisation du système de fixation. Le dôme intégré à la plaque elle-même permet une séparation entre la plaque et l'objet, étanche par rapport aux fluides, bruits, odeurs, ou champs électromagnétiques. A contrario, un système de fixation au moyen d'un trou nécessite de prévoir un moyen supplémentaire pour assurer l'étanchéité entre la plaque et l'objet.

L'invention s'étend à un procédé pour fixer un objet sur une plaque par l'intermédiaire d'une rondelle destinée à être liée à l'objet, caractérisé en ce que l'on déforme la plaque pour lui conférer un dôme conique, hémisphérique ou cylindrique et l'on enfonce la rondelle par rapport au dôme pour retenir l'objet sur la plaque par arc-boutement de la rondelle contre le dôme.

Le procédé selon l'invention s'intègre facilement dans un flux de production. Par comparaison, un procédé par perforation de la plaque entraîne une chute ou un copeau qu'il faut retirer.

Dans le cas d'une tôle, la déformation est assurée de préférence par emboutissage. De façon générale, la géométrie de la déformation est calculée en fonction des propriétés mécaniques de la plaque.

D'autres avantages de l'invention apparaîtront à la lecture de la description de deux modes de réalisation illustrés par les dessins.

La figure 1 est une vue en éclaté d'un système de fixation selon l'invention dans lequel la plaque comprend un dôme conique et la rondelle est cannelée.

La figure 2 est une vue en coupe du système de fixation illustré par la figure 1, montrant un stade initial, d'enfoncement de la rondelle cannelée par rapport à une surface convexe du dôme conique.

La figure 3 est une vue en coupe du système de fixation illustré par la figure 1, montrant un stade final d'enfoncement de la rondelle cannelée par rapport à la surface convexe du dôme conique.

La figure 4 est une vue en perspective d'un système de fixation selon l'invention dans lequel la plaque comprend un dôme conique et la rondelle est cannelée et arc-boutée contre la surface concave de ce dôme.

La figure 5 est une vue en coupe du système de fixation illustré par la figure 4.

La figure 6 est une vue en coupe partielle d'un système de fixation selon l'invention dans lequel la plaque comprend un dôme conique et la rondelle est lisse et arc-boutée contre la surface convexe de ce dôme.

La figure 7 est une vue en coupe du dôme conique illustré par les figures 1 à 6, obtenu par emboutissage de la plaque.

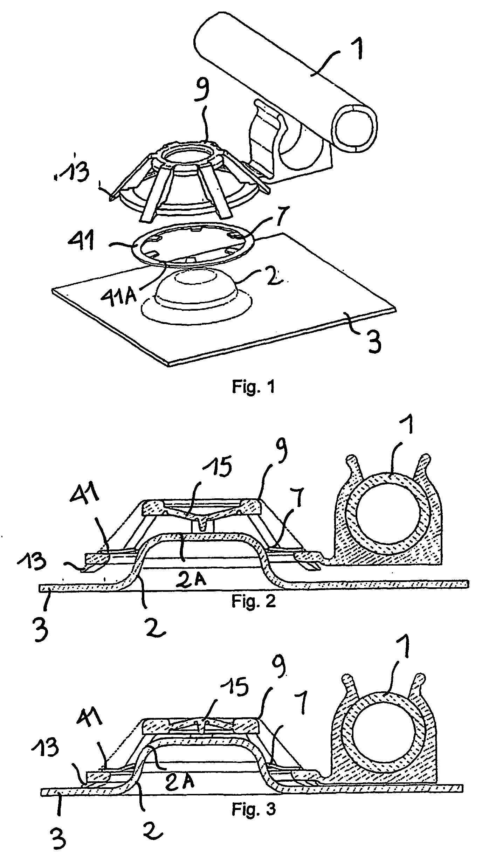

Un système de fixation d'un objet à une plaque par l'intermédiaire d'une rondelle cannelée tel qu'illustré par les figures 1 à 5 comprend un objet 1, une rondelle cannelée 41 et une plaque 3.

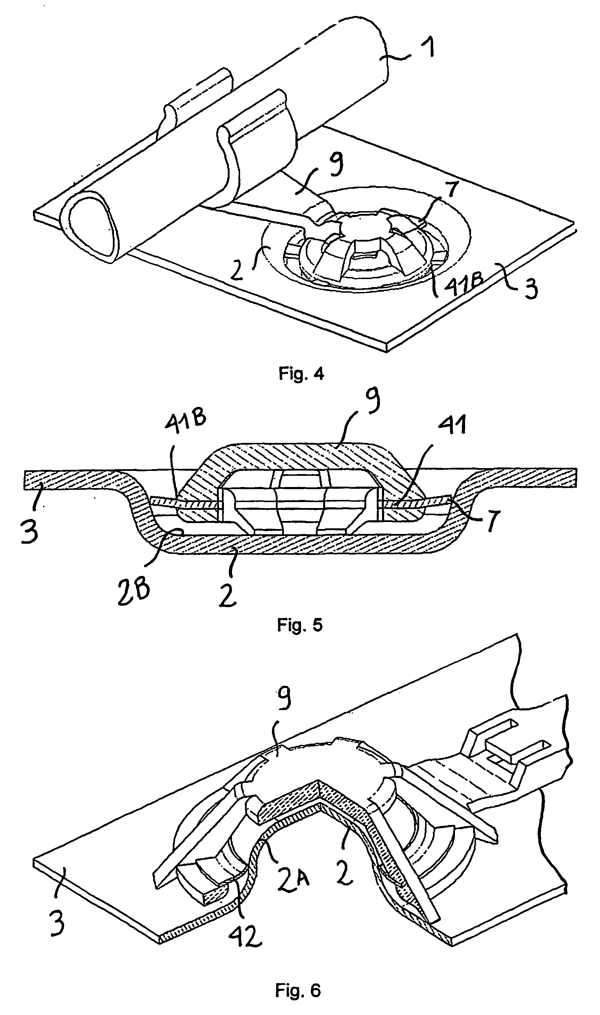

La figure 6 illustre un système de fixation d'un objet à une plaque par l'intermédiaire d'une rondelle non cannelée 42. Sur cette figure, les éléments communs avec les systèmes de fixation illustrés par les figures 1 à 5 portent les mêmes références.

La liaison entre la rondelle 41,42 et l'objet 1 est assurée par une pièce intermédiaire 9 dédiée au maintien de l'objet. Dans ce cas, la rondelle 41,42 sert de support ou est intégrée à cette pièce intermédiaire. La rondelle cannelée 41 ou non cannelée 42 peut également être liée à l'objet 1 en servant directement de support à ce dernier ou en y étant intégrée. Si l'objet à fixer ou la pièce intermédiaire sont en matière plastique, la liaison avec la rondelle 41,42 est par exemple réalisée par surmoulage de l'objet ou de la pièce intermédiaire autour de la rondelle. Il est également prévu de réaliser la liaison par pincement élastique entre la rondelle et l'objet à fixer.

La rondelle 41 possède des cannelures 7 se déformant en flexion contre la structure 2 de la plaque 3 lors de l'enfoncement de la rondelle 41 par rapport à cette structure 2. L'arc-boutement de la rondelle 41 est ici principalement assuré par la flexion des cannelures contre la structure 2 de la plaque 3. De même, la rondelle non cannelée 42 s'arc-boute contre la structure 2 de la plaque 3 au fur et à mesure qu'elle est enfoncée par rapport à cette structure 2.

Selon l'invention, la structure 2 est un dôme conique, hémisphérique ou cylindrique de la plaque 3.

Dans un premier mode d'exécution de l'invention, illustré par les figures 1 à 3, la rondelle 41 est cannelée sur son pourtour intérieur 41A pour être arc-boutée contre une surface convexe 2A du dôme 2 de la plaque 3. La rondelle cannelée 41 sert de support à une pièce intermédiaire 9 dédiée au maintien de l'objet à fixer 1. Des butées 13 sont prévues sur l'objet à fixer 1 ou la pièce intermédiaire 9 dédiée au maintien de l'objet à fixer pour limiter la course d'enfoncement de la rondelle cannelée 41 par rapport au dôme 2.

Il est prévu de munir la pièce intermédiaire 9 ou l'objet à fixer 1 lui-même d'un témoin 15 visuel, tactile ou sonore de bonne mise en oeuvre du système de fixation. Dans l'exemple des figures 1 à 3, le témoin 15 est un opercule bi-stable.

Dans un deuxième mode d'exécution de l'invention, illustré par les figures 4 et 5, la rondelle 41 est cannelée sur son pourtour extérieur 41B pour être arc-boutée contre une surface concave 2B du dôme 2 de la plaque 3.

Dans le cas d'un dôme conique ou hémisphérique, l'arc-boutement de la rondelle 41 par flexion des cannelures 7 augmente au fur et à mesure que la rondelle 41 est enfoncée contre la surface convexe 2A ou contre la surface concave 2B du dôme.

La figure 6 montre la rondelle non cannelée 42 arc-boutée contre la surface convexe 2A du dôme conique 2 de la plaque 3. La rondelle non cannelée 42 peut également être arc-boutée contre la surface concave 2B du dôme 2 de la plaque 3.

L'utilisation d'une rondelle d'arc-boutement conductrice permet de réaliser un contact électrique avec la surface concave ou convexe du dôme pour réaliser un piquage de masse pu de potentiel électrique. Dans ce cas, la rondelle d'arc-boutement comprend un contacteur électrique.

Dans le cas d'un dôme métallique, de préférence, on prévoit un revêtement anticorrosion sur la rondelle d'arc-boutement, en particulier, un revêtement anticorrosion de potentiel galvanique inférieur à celui de la surface concave ou convexe du dôme. Ce revêtement est dit revêtement anodique ou sacrificiel. Dans cette gamme de revêtements sacrificiels, on prévoit des oxydes formant une couche de passivation, de préférence à base d'aluminium ou de zinc.

Pour fixer l'objet 1 sur la plaque 3 par l'intermédiaire de la rondelle cannelée 41 ou non cannelée 42, liée à l'objet 1, de préférence l'on déforme la plaque 3 pour lui conférer un dôme 2 conique, hémisphérique ou cylindrique et l'on enfonce la rondelle cannelée 41 ou non cannelée 42 par rapport au dôme 2 pour retenir l'objet 1 sur la plaque 3 par arc-boutement de la rondelle cannelé 41 ou non cannelée 42 contre le dôme 2.

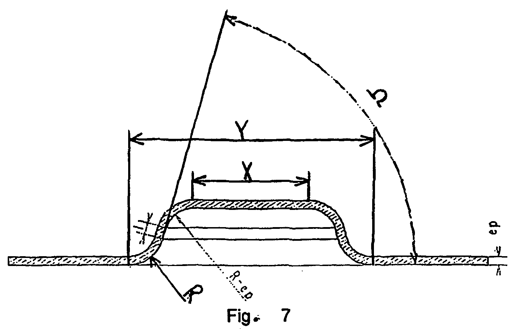

Dans le cas de la fixation sur une tôle, les paramètres et règles de calcul à respecter sont l'allongement maximum de la tôle, le rayon de courbure minimum et la dépouille minimale. A titre d'exemple, illustré par la figure 7, on déforme la tôle par emboutissage en respectant les paramètres suivants : allongement maximum de la tôle « A » ≤1,3 ; rayon de courbure minimum « R » ≥3 mm ; dépouille minimale d'emboutissage « α » ≥3° ; dépouille maximale en limite d'adhérence « θ » ≤25°. On choisit un angle de dépouille Ω compris entre α et θ le plus proche de la limite d'adhérence θ pour obtenir une différence maximale entre le diamètre X au sommet du dôme et le diamètre Y à la base du dôme. Cette différence de diamètres détermine des intervalles de tolérance du dôme et de la rondelle d'arc-boutement. La valeur de l'angle θ est choisie pour obtenir les efforts d'enfoncement et d'arrachement recherchés.

## Revendications

1. Système de fixation d'un objet (1) à une plaque (3) par l'intermédiaire d'une rondelle (41,42), dans lequel l'objet est lié à la rondelle et la plaque comprend une structure' (2) pour retenir l'objet par arc-boutement de la rondelle contre cette structure, **caractérisé en ce que** cette structure (2) est un dôme conique, hémisphérique ou cylindrique de la plaque.

2. Système de fixation selon la revendication 1, **caractérisé en ce que** le dôme (2) présente une surface convexe (2A) contre laquelle la rondelle (41,42) est arc-boutée.

3. Système de fixation selon la revendication 1, **caractérisé en ce que** le dôme (2) présente une surface concave (2B) contre laquelle la rondelle (41,42) est arc-boutée.

4. Système de fixation selon la revendication 1, 2 ou 3, **caractérisé en ce que** la rondelle (4) comprend un contacteur électrique.

5. Système de fixation selon l'une des revendications 1 à 4, **caractérisé en ce que** la rondelle (41) est cannelée.

6. Procédé pour fixer un objet (1) sur une plaque (3) par l'intermédiaire d'une rondelle (41,42) destinée à être liée à l'objet, **caractérisé en ce que** l'on déforme la plaque (3) pour lui conférer un dôme (2) conique, hémisphérique ou cylindrique et l'on enfonce la rondelle (41,42) par rapport au dôme (2) pour retenir l'objet (1) sur la plaque (3) par arc-boutement de la rondelle (41,42) contre le dôme (2)

7. Procédé selon la revendication 6, **caractérisé en ce que** l'on enfonce la rondelle (41,42) contre une surface convexe (2A) du dôme (2) de la plaque (3).

8. Procédé selon la revendication 6, **caractérisé en ce que** l'on enfonce la rondelle (41,42) contre une surface concave (2B) du dôme (2) de la plaque (3).

9. Procédé selon la revendication 6, 7 ou 8, **caractérisé en ce que** l'on forme le dôme (2) par emboutissage de la plaque (3).

10. Procédé selon l'une quelconque des revendications 6 à 9, **caractérisé en ce que** l'on utilise une rondelle cannelée (41).

## Patentansprüche

1. System zum Befestigen eines Gegenstandes (1) auf einer Platte (3) vermittels einer Unterlegscheibe (41, 42), bei dem der Gegenstand mit der Unterlegscheibe verbunden wird und die Platte eine Struktur (2) umfasst, um den Gegenstand durch Abstützen der Unterlegscheibe an dieser Struktur zu festzuhalten, **dadurch gekennzeichnet, dass** diese Struktur (2) eine kegelförmige, halbkugelförmige oder zylindrische Wölbung der Platte ist.

2. System zum Befestigen nach Anspruch 1, **dadurch gekennzeichnet, dass** die Wölbung (2) eine konvexe Oberfläche (2A) aufweist, an der die Unterlegscheibe (41, 42) abgestützt wird.

3. System zum Befestigen nach Anspruch 1, **dadurch gekennzeichnet, dass** die Wölbung (2) eine konkave Oberfläche (2B) aufweist, an der die Unterlegscheibe (41, 42) abgestützt wird.

4. System zum Befestigen nach Anspruch 1, 2 oder 3, **dadurch gekennzeichnet, dass** die Unterlegscheibe (4) einen elektrischen Verbinder umfasst.

5. System zum Befestigen nach einem der Ansprüche 1 bis 4, **dadurch gekennzeichnet, dass** die Unterlegscheibe (41) gezahnt ist.

6. Verfahren zum Befestigen eines Gegenstandes (1) auf einer Platte (3) vermittels einer Unterlegscheibe (41, 42), die dafür bestimmt ist, mit dem Gegenstand verbunden zu werden, **dadurch gekennzeichnet, dass** die Platte (3) verformt wird, um ihr eine kegelförmige, halbkugelförmige oder zylindrische Wölbung (2) zu verleihen, und dass die Unterlegscheibe (41, 42) in die Wölbung (2) gepresst wird, um den Gegenstand (1) durch Abstützen der Unterlegscheibe (41, 42) an der Wölbung (2) auf der Platte (3) festzuhalten.

7. Verfahren nach Anspruch 6, **dadurch gekennzeichnet, dass** die Unterlegscheibe (41, 42) in eine konvexe Oberfläche (2A) der Wölbung (2) der Platte (3) eingepresst wird.

8. Verfahren nach Anspruch 6, **dadurch gekennzeichnet, dass** die Unterlegscheibe (41, 42) in eine konkave Oberfläche (2B) der Wölbung (2) der Platte (3) eingepresst wird.

9. Verfahren nach Anspruch 6, 7 oder 8, **dadurch gekennzeichnet, dass** die Wölbung (2) durch Tiefziehen der Platte (3) gebildet wird.

10. Verfahren nach einem beliebigen der Ansprüche 6 bis 9, **dadurch gekennzeichnet, dass** eine gezahnte Unterlegscheibe (41) verwendet wird.

## Claims

1. System for fixing an object (1) to a plate (3) via a washer (41,42), in which the object is linked to the washer and the plate comprises a structure (2) for retaining the object by bracing of the washer against this structure, **characterised in that** this structure (2) is a conical, hemispherical or cylindrical dome of the plate.

2. Fixing system according to Claim 1, **characterised in that** the dome (2) has a convex surface (2A) against which the washer (41,42) is braced.

3. Fixing system according to Claim 1, **characterised in that** the dome (2) has a concave surface (2B) against which the washer (41,42) is braced.

4. Fixing system according to Claim 1, 2 or 3, **characterised in that** the washer (4) comprises an electrical contactor.

5. Fixing system according to one of Claims 1 to 4, **characterised in that** the washer (41) is grooved.

6. Method for fixing an object (1) on a plate (3) via a washer (41,42) designed to be linked to the object, **characterised in that** the plate (3) is deformed to provide it with a conical, hemispherical or cylindrical dome (2) and the washer (41,42) is driven in relative to the dome (2) to retain the object (1) on the plate (3) by bracing of the washer (41,42) against the dome (2).

7. Method according to Claim 6, **characterised in that** the washer (41,42) is driven in against a convex surface (2A) of the dome (2) of the plate (3).

8. Method according to Claim 6, **characterised in that** the washer (41,42) is driven in against a concave surface (2B) of the dome (2) of the plate (3).

9. Method according to Claim 6, 7 or 8, **characterised in that** the dome (2) is formed by swaging the plate (3).

10. Method according to any one of Claims 6 to 9, **characterised in that** a grooved washer (41) is used.
